# EUROPEAN PATENT APPLICATION

(11) **EP 4 790 283 A1**
(43) Date of publication of application: **12.08.2026**
(21) Application number: 24884486.2
(22) Date of filing: 21.10.2024
(51) Int. Cl.: F16K 11/074

(54) **MULTIPORT VALVE**

(30) Priority: 31.10.2023 CN 202311449346
(71) Applicant: Zhejiang Dunan Artificial Environment Co., Ltd., Shaoxing, Zhejiang 311835 (CN)
(72) Inventor: XIONG, Yunjun, Shaoxing, Zhejiang 311835 (CN); DU, Danian, Shaoxing, Zhejiang 311835 (CN)
(74) Representative: Zacco GmbH
(86) International application number: PCT/CN2024/126145
(87) International publication number: WO 2025/092482

(57) **Abstract**

The present disclosure provides a multi-way valve. The multi-way valve includes: a valve body; a valve core rotatably disposed in the valve body; a driving assembly, wherein the driving assembly includes a driving part and a reduction gear set, the reduction gear set is provided with a sun gear, planet gears, a first connecting plate, a second connecting plate and an output part, the driving part is in driving connection with the sun gear, a plurality of planet gears are provided, and the plurality of planet gears are all in meshing engagement with the sun gear, the first connecting plate is rotatably connected to first ends of the plurality of planet gears, and the second connecting plate is rotatably connected to second ends of the plurality of planet gears, a gap is provided between a first end of the sun gear and the first connecting plate, and between a second end of the sun gear and the second connecting plate, an end of the output part is in driving connection with the plurality of planet gears, an other end of the output part is in driving connection with the valve core, and the driving part drives the valve core to rotate via the reduction gear set. By means of a technical solution of the present disclosure, a problem in a prior art of relatively large friction loss inside a planet gear reduction assembly can be solved.

## Description

The present disclosure claims priority to Patent Application No. 2023114493465, filed with the China National Intellectual Property Administration on October 31, 2023 and titled "Multi-way Valve".

### Technical Field

The present disclosure relates to the technical field of control valve, and in particular to a multi-way valve.

### Background

A multi-way valve in a prior art mainly includes a driving assembly, a valve core and a valve body. The valve core is rotatably disposed in the valve body. The valve body is provided with a plurality of communication ports and an inlet/outlet port. The valve core is provided with a flow-through channel matching the plurality of communication ports. The driving assembly can drive the valve core to rotate, so that the flow-through channel matches and communicates with different communication port of the plurality of communication ports, thereby realizing a switching of heating and cooling modes.

The driving assembly in a prior art mainly includes a drive device and a planet gear reduction assembly, wherein the planet gear reduction assembly can increase a torque of the drive device, the valve core can overcome a load torque and a friction torque, and a switching effect of the valve core is ensured. However, in an existing planet gear reduction assembly, a driving torque for the valve core will be reduced due to a friction between structures thereof during an operation process, and affects a working efficiency of the driving assembly.

### Summary

The present disclosure provides a multi-way valve to solve a problem of relatively large friction loss inside a reduction assembly in a prior art.

The present disclosure provides a multi-way valve. The multi-way valve includes: a valve body; a valve core rotatably disposed in the valve body; a driving assembly, wherein the driving assembly includes a driving part and a reduction gear set, the reduction gear set is provided with a sun gear, planet gears, a fixed gear, a first connecting plate, a second connecting plate and an output part, the driving part is in driving connection with the sun gear, a plurality of planet gears are provided, and the plurality of planet gears are all in meshing engagement with the sun gear, the fixed gear is sleeved on the plurality of planet gears, the fixed gear is fixedly arranged relative to the sun gear, outer teeth of the plurality of planet gears are engaged with inner teeth of the fixed gear, the first connecting plate is rotatably connected to first ends of the plurality of planet gears, and the second connecting plate is rotatably connected to second ends of the plurality of planet gears, a gap is provided between a first end of the sun gear and the first connecting plate, and between a second end of the sun gear and the second connecting plate, an end of the output part is in driving connection with the plurality of planet gears, an other end of the output part is in driving connection with the valve core, and the driving part drives the valve core to rotate via the reduction gear set.

By applying a technical solution of the present disclosure, the sun gear can transfer a torque of the driving part to the output part via the plurality of planet gears, the plurality of planet gears and the fixed gear can cooperate to increase the torque from the driving part, and output the increased torque to the valve core. In this way, the valve core can be quickly rotated, thereby realizing quick switching of a cooling and heating mode of the multi-way valve. By arranging the first connecting plate and the second connecting plate at two ends of the plurality of planet gears, a synchronous movement of the plurality of planet gears can be ensured, in order to prevent a phenomenon of the plurality of planet gears being stuck during rotation, the gap is provided between the first end of the sun gear and the first connecting plate, and between the second end of the sun gear and the second connecting plate, it can prevent the sun gear from rubbing against the first connecting plate and the second connecting plate during rotation, reducing a friction torque received by the driving part, reducing a power loss of the driving assembly, and further ensuring quick switching of the cooling and heating mode of the multi-way valve.

Further, the plurality of planet gears, the first connecting plate and the second connecting plate form a planet assembly, the planet assembly has an upper limit position and a lower limit position in an axial direction relative to the sun gear, the first connecting plate is arranged close to the upper limit position, and the second connecting plate is arranged close to the lower limit position, and when the planet assembly is located at the upper limit position, a gap is provided between the second end of the sun gear and the second connecting plate; when the planet assembly is located at the lower limit position, a gap is provided between the first end of the sun gear and the first connecting plate. By means of the described arrangement, a gap is provided between the second end of the sun gear and the second connecting plate, or between the first end of the sun gear and the first connecting plate, such that when the reduction gear set is displaced, the sun gear is subjected to a friction torque from the first connecting plate or the second connecting plate, thereby improving a reliability of an operation of the multi-way valve.

Further, the sun gear is fixedly connected to the driving part, and a distance between the first connecting plate and the second connecting plate is greater than a length of the sun gear in the axial direction. By means of the described arrangement, a gap can be formed between the first end of the sun gear and the first connecting plate, and between the second end of the sun gear and the second connecting plate, thereby reducing the friction torque received by the driving part, and further reducing the power loss of the driving assembly.

Further, the output part includes an output gear; the output gear is rotatably sleeved on the plurality of planet gears; outer teeth of the plurality of planet gears are engaged with inner teeth of the output gear; an end of the output gear is provided with an output shaft; and the output shaft is in driving connection with the valve core. By means of the described arrangement, a transmission level of the reduction gear set can be increased, an overall transmission ratio of the reduction gear set can be increased, and the output gear can further increase an input torque of the driving part, thereby increasing the input torque of the driving part.

Further, the output gear includes a bottom plate and an internal gear; the internal gear is arranged on a side of the bottom plate; the output shaft is arranged on an other side of the bottom plate; a first limiting protrusion is provided on an end surface of a side of the bottom plate on which the internal gear is located, the first limiting protrusion is used for abutting against the second connecting plate. By means of the described arrangement, an overall contact between the second connecting plate and the bottom plate can be avoided, a contact area between the second connecting plate and the bottom plate is reduced, a friction torque of the second connecting plate from the output gear is reduced, and a power loss of the reduction gear set is further reduced.

Further, the valve body is provided with a mounting groove, the reduction gear set is provided in the mounting groove, a bottom of the mounting groove is provided with a communication hole, the output shaft is in driving connection with the valve core through the communication hole, the bottom of the mounting trough is further provided with a second limiting protrusion, and the second limiting protrusion is used for abutting against the bottom plate. By means of the described arrangement, an overall contact between the bottom plate and the bottom of the mounting groove can be prevented, a contact area between the bottom of the mounting groove and the bottom plate is reduced, a friction torque of the bottom plate from the bottom of the mounting groove is reduced, and the power loss of the reduction gear set is further reduced.

Further, the valve body is provided with a mounting base, the reduction gear set is arranged in the mounting base, the mounting base is provided with a mounting hole, the driving part includes a transmission shaft and a bearing, the transmission shaft passes through the mounting hole and is in driving connection with the sun gear, the bearing is sleeved on the transmission shaft and is located between the transmission shaft and an inner wall of the mounting hole. By means of the described arrangement, the bearing arranged on the transmission shaft can reduce a friction between the transmission shaft and the mounting hole, reducing a friction loss of the transmission shaft from the mounting base, and reducing the power loss of the driving assembly.

Further, the transmission shaft includes a first mounting segment and a second mounting segment that are connected to each other, the first mounting segment is in driving connection with the sun gear, the bearing is disposed on the second mounting segment, the multi-way valve further includes a first limiting structure, the first limiting structure is arranged between an inner ring of the bearing and the transmission shaft, and the first limiting structure is used for limiting a displacement of the inner ring of the bearing in an axial direction relative to the transmission shaft. By means of the described arrangement, the first limiting structure can prevent the bearing from moving on the transmission shaft, ensuring a stability of the driving part in operation, and at a same time can also prevent the transmission shaft from moving axially, thereby further improving a stability of the driving assembly in operation.

Further, the transmission shaft further includes a limiting segment located between the first mounting segment and the second mounting segment, an outer diameter of the limiting segment is greater than an outer diameter of the first mounting segment and an outer diameter of the second mounting segment, and an end of the inner ring of the bearing abuts against the limiting segment, the driving assembly further includes a bushing, the bushing is sleeved on the transmission shaft, and the bushing is located at an end of the bearing away from the limiting segment, the bushing is in limiting fit with the inner ring of the bearing, and the limiting segment is fitted with the bushing to form the first limiting structure. By means of the described arrangement, the first limiting structure can perform axial limiting on the bearing, thereby realizing axial positioning of the bearing and the transmission shaft, ensuring that the driving part can stably provide a rotational torque for the reduction gear set, and ensuring an operation stability of the multi-way valve.

Further, the multi-way valve further includes a second limiting structure, the second limiting structure is arranged between an outer ring of the bearing and the mounting hole, and the second limiting structure is used for limiting a displacement of the outer ring of the bearing in an axial direction relative to the transmission shaft. By means of the described arrangement, the first limiting structure and the second limiting structure can respectively axially limit the inner ring and the outer ring of the bearing, so that the first limiting structure or the second limiting structure can be prevented from simultaneously limiting the inner ring and the outer ring of the bearing, thereby preventing the bearing from being subjected to unnecessary friction in a rotation process.

Further, the second limiting structure includes two spacers fixed in the mounting hole, the two spacers are respectively located at two ends of the bearing, and the two spacers are in limiting fit with an outer ring of the bearing. By means of the described arrangement, the two spacers can respectively perform upper limiting and lower limiting on the outer ring of the bearing, so as to prevent the outer ring of the bearing from generating axial displacement, and ensure the stability of the multi-way valve in operation.

The upper limit position of the planet assembly can be determined by means of a limiting segment or a spacer, and when the planet assembly is located in the upper limit position, the first connecting plate abuts against an end of the limiting segment facing towards the planet assembly, or abuts against an end of one of the two spacers facing towards the planet assembly. By means of the described arrangement, excessive movement of the planet assembly in the axial direction can be prevented, and a stability of the planet assembly during a rotation with the sun gear is guaranteed.

### Brief Description of the Drawings

The accompanying drawings, which form a part of the present disclosure, are used for providing a further understanding of the present disclosure. The schematic embodiments and illustrations of the present disclosure are used to explain the present disclosure, but not to limit the present disclosure. In the drawings:
Fig. 1 is a schematic structural view of a multi-way valve according to an embodiment of the present invention;
Fig. 2 is a partially enlarged view of A in Fig. 1;
Fig. 3 is a schematic assembly diagram of a first mounting plate and a second mounting plate according to an embodiment of the present disclosure;
Fig. 4 shows a schematic structural diagram of a sun gear cooperating with a plurality of planet gears according to an embodiment of the present disclosure;
Fig. 5 shows a schematic structural diagram of a reduction gear set according to an embodiment of the present disclosure;
Fig. 6 shows a schematic structural diagram of a transmission shaft according to an embodiment of the present disclosure;
Fig. 7 is a schematic structural diagram of a transmission shaft cooperating with a bearing according to an embodiment of the present disclosure.

The figures include the following reference signs:
100, valve body; 200, valve core;
10, driving assembly;
101, mounting groove; 1011, second limiting protrusion; 102, mounting base;
11, driving part; 111, transmission shaft; 1111, first mounting segment; 1112, second mounting segment; 1113, limiting segment; 112, bearing;
12, reduction gear set; 121, sun gear; 122, planet gear; 123, fixed gear; 124, first connecting plate; 125, second connecting plate;
126, output gear; 1261, bottom plate; 1262, internal gear; 1263, first limiting protrusion; 127, output shaft;
13, bushings; 14, spacer.

### Detailed Description of the Embodiments

The following clearly and completely describes the technical solutions in the embodiments of the present disclosure with reference to the accompanying drawings in the embodiments of the present disclosure. Apparently, the described embodiments are merely a part rather than all of the embodiments of the present disclosure. The following description of at least one exemplary embodiment is merely illustrative in nature and is in no way intended to limit the disclosure and any application or use thereof. All other embodiments obtained by a person of ordinary skill in the art based on the embodiments of the present disclosure without creative efforts shall belong to the scope of protection of the present disclosure.

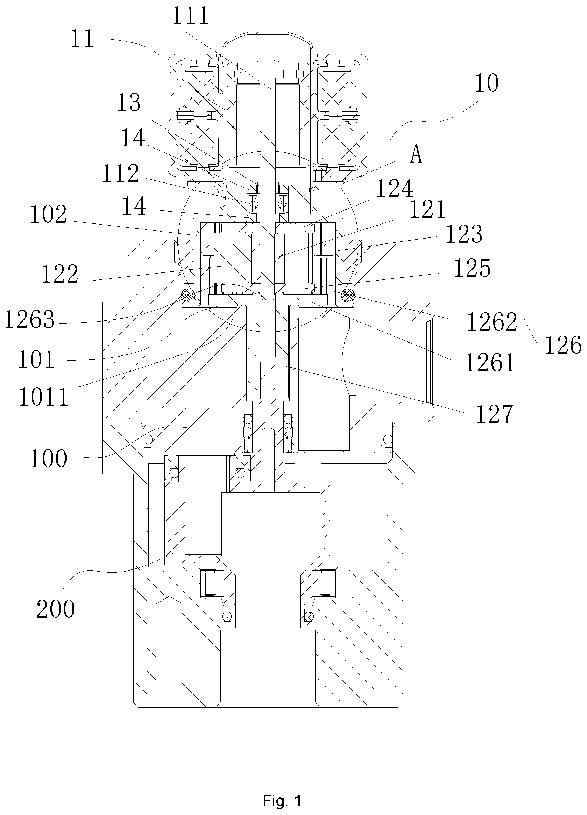

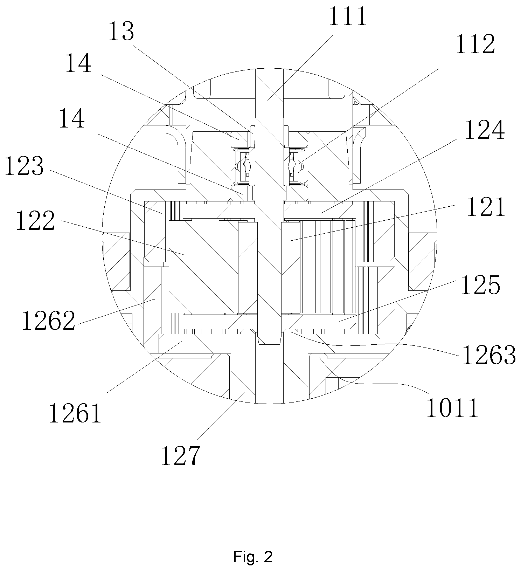

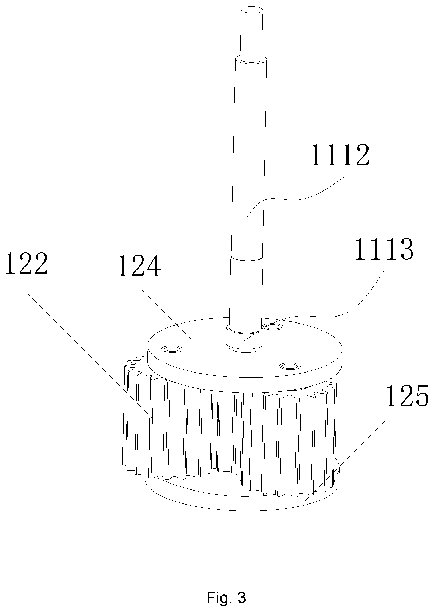

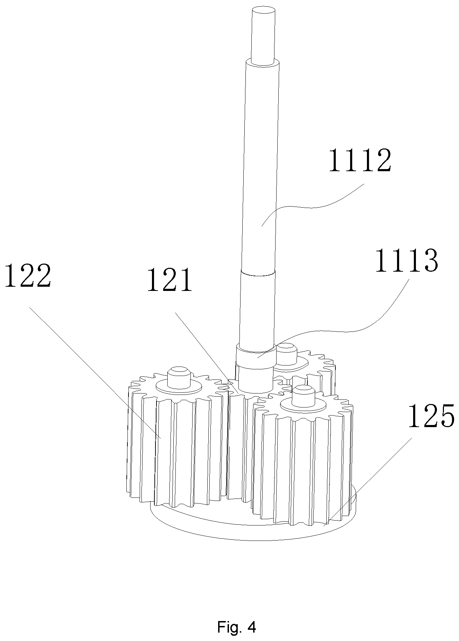

Referring to Fig. 1 to Fig. 5, a multi-way valve provided in the present disclosure includes a valve body 100, a valve core 200, and a driving assembly 10. The valve core 200 is rotatably disposed in the valve body 100. the driving assembly 10 includes a driving part 11 and a reduction gear set 12, the reduction gear set 12 has a sun gear 121, planet gears 122, a fixed gear 123, a first connecting plate 124, a second connecting plate 125 and an output part, the driving part 11 is in driving connection with the sun gear 121, a plurality of planet gears 122 are provided, and the plurality of planet gears 122 are all in meshing engagement with the sun gear 121, the fixed gear 123 is sleeved on the plurality of planet gears 122, and the fixed gear 123 is fixedly arranged with respect to the sun gear 121, outer teeth of the plurality of planet gears 122 are engaged with inner teeth of the fixed gear 123, and the sun gear 121 and the plurality of planet gears 122 each have a first end and a second end arranged opposite to each other in an axial direction, the first end of the sun gear 121 and the first ends of the plurality of planet gears 122 are arranged on a same side, and the first connecting plate 124 is rotatably connected to the first ends of the plurality of planet gears 122, the second connecting plate 125 is rotatably connected to the second ends of the plurality of planet gears 122, a gap is provided between a first end of the sun gear 121 and the first connecting plate 124, and between a second end of the sun gear 121 and the second connecting plate 125, an end of the output part is in driving connection with the plurality of planet gears 122, and an other end of the output part is in driving connection with the valve core 200, the driving part 11 drives the valve core 200 to rotate through the reduction gear set 12.

By applying a technical solution of the present disclosure, the sun gear 121 can transfer a torque of the driving part 11 to the output part via the plurality of planet gears 122, the plurality of planet gears 122 and the fixed gear 123 can cooperate to increase the torque from the driving part 11 and output the increased torque to the valve core 200, in this way, quick rotation of the valve core 200 can be achieved, thereby realizing quick switching of the multi-way valve between cooling and heating modes, by arranging the first connecting plate 124 and the second connecting plate 125 at two ends of the plurality of planet gears 122, the plurality of planet gears 122 can be ensured to move synchronously, in order to prevent the plurality of planet gears 122 from being blocked during rotation, the gap is provided between the first end of the sun gear 121 and the first connecting plate 124, and between the second end of the sun gear 121 and the second connecting plate 125, it can prevent the sun gear 121 from rubbing against the first connecting plate 124 and the second connecting plate 125 during rotation, the friction torque applied to the driving part 11 is reduced, a power loss of the driving assembly 10 is reduced, and quick switching of the cooling and heating modes of the multi-way valve is further ensured.

In some embodiments, the plurality of planet gears 122, the first connecting plate 124 and the second connecting plate 125 form a planet assembly, the planet assembly has an upper limit position and a lower limit position in an axial direction relative to the sun gear 121, the first connecting plate 124 is arranged close to the upper limit position, and the second connecting plate 125 is arranged close to the lower limit position, and when the planet assembly is located at the upper limit position, there is a gap between the second end of the sun gear 121 and the second connecting plate 125; when the planet assembly is in the lower limit position, there is a gap between the first end of the sun gear 121 and the first connecting plate 124. With an above arrangement, when the reduction gear set 12 is impacted by a fluid to move in a direction away from the valve core 200 and the planet assembly is located at the upper limit position, or when the reduction gear set 12 falls naturally under an influence of gravity and the planet assembly is located at the lower limit position, two ends of the sun gear 121 are respectively spaced apart from a corresponding the first connecting plate 124 and the second connecting plate 125, in this way, the sun gear 121 can be reduced from being subjected to a friction torque from the first connecting plate 124 or the second connecting plate 125, a reliability of an operation of the multi-way valve is improved.

In some embodiments of the present disclosure, the upper limit position of the planet assembly can be determined by the limiting segment 1113, the spacer 14 or an inner wall of the mounting base 102, and the lower limit position of the planet assembly can be determined by the first limiting protrusion 1263. when the planet assembly is located at the upper limit position, the first connecting plate 124 abuts against an end of the limiting segment 1113 facing towards the planet assembly, or abuts against an end of one of the spacers 14 facing towards the planet assembly, or abuts against an inner wall of the mounting base 102, so as to prevent the planet assembly from occurring excessive movement away from the valve core 200; when the planet assembly is located at the lower limit position, the second connecting plate 125 abuts against the first limiting protrusion 1263, so as to prevent excessive flapping of the planet assembly towards the valve core 200. By means of the described arrangement, a stability of the planet assembly during rotation with the sun gear 121 can be ensured.

In some embodiments, the sun gear 121 is fixedly connected to the driving part 11 and is in interference fit with the transmission shaft 111, and a distance between the first connecting plate 124 and the second connecting plate 125 is greater than a length of the sun gear 121 in the axial direction. By means of the described arrangement, a gap can be formed between the first end of the sun gear 121 and the first connecting plate 124, and between the second end of the sun gear 121 and the second connecting plate 125, thereby reducing the friction torque received by the driving part 11, and further reducing the power loss of the driving assembly 10.

In an embodiment of the present disclosure, the output part includes an output gear 126, the output gear 126 is rotatably sleeved on the plurality of planet gears 122, outer teeth of the plurality of planet gears 122 are engaged with inner teeth of the output gear 126, an end of the output gear 126 is provided with an output shaft 127, and the output shaft 127 is in driving connection with the valve core 200. By means of the described arrangement, a transmission level of the reduction gear set 12 can be increased, an overall transmission ratio of the reduction gear set 12 can be increased, and the output gear 126 can further increase an input torque of the driving part 11, thereby increasing the input torque of the driving part, improving a rotation performance of the valve core 200, and facilitating rapid switching of a cooling and heating mode of the multi-way valve.

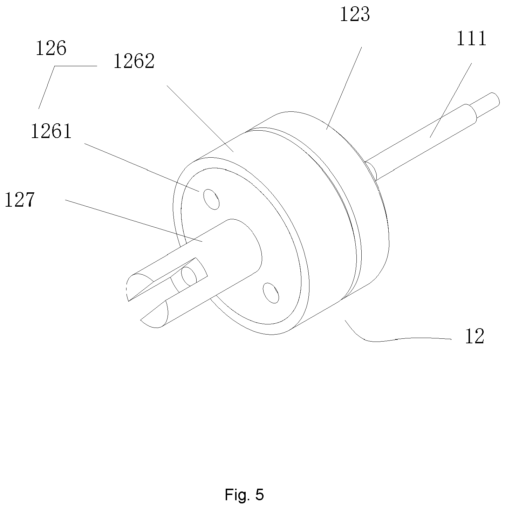

As shown in Fig. 5, an interval exists between the output gear 126 and the fixed gear 123, so that friction can be prevented from being generated between the fixed gear 123 and the output gear 126, a friction torque on the output gear 126 is reduced, a smoothness of an operation of the reduction gear set 12 is improved, and a mechanical efficiency is improved.

Further, the output gear 126 includes a bottom plate 1261 and an internal gear 1262, the internal gear 1262 is arranged on a side of the bottom plate 1261, the output shaft 127 is arranged on an other side of the bottom plate 1261, an end surface of a side of the bottom plate 1261 close to the internal gear 1262 is provided with a first limiting protrusion 1263, and the first limiting protrusion 1263 is used for abutting against the second connecting plate 125. By means of the described arrangement, an end surface of a side of the second connecting plate 125 facing a direction of the bottom plate 1261 can be in contact with the first limiting protrusion 1263 of the internal gear 1262, thereby preventing the second connecting plate 125 from being integrally in contact with the bottom plate 1261, reducing a contact area between the second connecting plate 125 and the bottom plate 1261, reducing a friction torque of the second connecting plate 125 from the output gear 126, and further reducing a power loss of the reduction gear set 12.

In some embodiments, the first limiting protrusion 1263 can be annularly disposed on an end surface of a side of the bottom plate 1261 on which the internal gear 1262 is located, so as to reduce a friction force on the second connecting plate 125. In some embodiments of the present disclosure, an end surface of the first limiting protrusion 1263 on a side facing the second connecting plate 125 can be set as a curved surface to further reduce the contact area with the second connecting plate 125, or be set as a plane to reduce a friction loss of the second connecting plate 125 on the first limiting protrusion 1263, so as to improve a service life of the reduction gear set 12.

In an embodiment of the present disclosure, a lubricating layer can be added to an end surface of the first limiting protrusion 1263 on a side facing the second connecting plate 125, so as to further reduce the friction force between the first limiting protrusion 1263 and the second connecting plate 125, further reduce the power loss of the reduction gear set 12, and improve a rotation performance of the reduction gear set 12.

In an embodiment of the present disclosure, the valve body 100 has a mounting groove 101, the reduction gear set 12 is provided in the mounting groove 101, a communication hole is provided at a bottom of the mounting groove 101, the output shaft 127 is in driving connection with the valve core 200 through the communication hole, a second limiting protrusion 1011 is further provided at the bottom of the mounting groove 101, and the second limiting protrusion 1011 is used for abutting against the bottom plate 1261. By means of the described arrangement, an end surface of a side of the bottom plate 1261 facing towards a direction of a bottom of the mounting groove 101 can be in contact with the second limiting protrusion 1011 of the bottom of the mounting groove 101, thereby preventing the bottom plate 1261 from being integrally in contact with the bottom of the mounting groove 101, reducing a contact area between the bottom of the mounting groove 101 and the bottom plate 1261, reducing a friction torque between the bottom plate 1261 and the bottom of the mounting groove 101, and further reducing the power loss of the reduction gear set 12.

In some embodiments of the present disclosure, the second limiting protrusion 1011 can be annularly arranged on the bottom of the mounting groove 101, so as to reduce the friction force for the reduction gear set 12. Further, the second limiting protrusion 1011 can be annularly arranged on a periphery of the communication hole to further reduce an area of the second limiting protrusion 1011 in a direction towards the bottom plate 1261, so as to reduce the contact area between the second limiting protrusion 1011 and the bottom plate 1261, and reduce the friction force on the reduction gear set 12, a friction torque received by the reduction gear set 12 from the mounting groove 101 is reduced, and the power loss received by the driving assembly 10 is reduced, a reliability of the multi-way valve operation is improved. In some embodiments of the present disclosure, an upper limit position of the output gear 126 can be determined by the fixed gear 123, or determined by the upper limit position of the planet assembly; a lower limit position of the output gear 126 can be determined by the second limiting protrusion 1011, so that excessive flapping of the output gear 126 in the axial direction can be prevented, and further ensure that the driving assembly 10 can stably drive the valve core 200 to rotate, thereby improving a stability of the multi-way valve.

In other embodiments of the present disclosure, an end surface of the second limiting protrusion 1011 facing the bottom plate 1261 can also be provided with a lubricating layer to further reduce a friction force between the second limiting protrusion 1011 and the bottom plate 1261, further reduce the power loss of the reduction gear set 12, and improve the rotation performance of the reduction gear set 12.

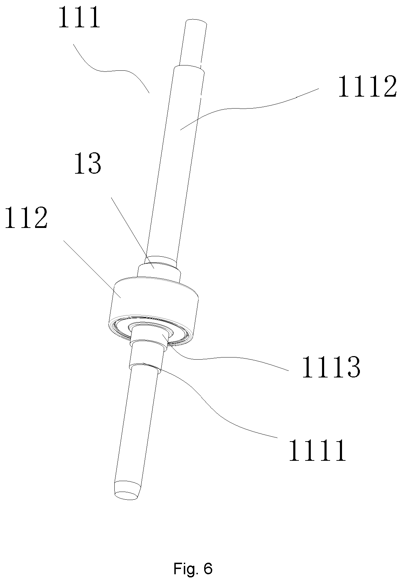

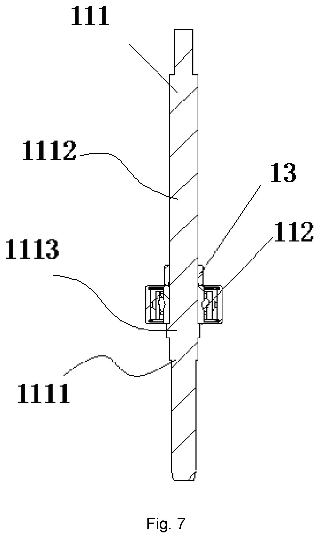

Further, the valve body 100 is provided with a mounting base 102, the reduction gear set 12 is provided in the mounting base 102; the mounting base 102 is provided with a mounting hole; as shown in Fig 6 and Fig 7, the driving part 11 includes a transmission shaft 111 and a bearing 112; the transmission shaft 111 passes through the mounting hole and is in driving connection with the sun gear 121; and the bearing 112 is sleeved on the transmission shaft 111 and is located between the transmission shaft 111 and an inner wall of the mounting hole. By means of the described arrangement, the bearing 112 arranged on the transmission shaft 111 can reduce a friction between the transmission shaft 111 and the mounting hole, reducing a friction loss of the transmission shaft 111 from the mounting base102, and reducing the power loss of the driving assembly 10.

In the present disclosure, the bearing 112 is fixedly provided on the transmission shaft 111, and the bearing 112 and the transmission shaft 111 can be in an interference fit, so as to reduce a probability of the bearing 112 moving on the transmission shaft 111, and improve the stability of the multi-way valve in operation.

In some embodiments, the bearing 112 is press-fit into the mounting hole in an interference manner, and an outer side wall of the bearing 112 and an inner side wall of the mounting hole are in an interference fit. In this way, a radial fixation of the bearing 112 and the transmission shaft 111 can be achieved, and the transmission shaft 111 is prevented from shaking or swinging in a rotation process, thereby ensuring normal operation of the driving assembly 10 and improving the stability of the multi-way valve in operation.

In some embodiments, the transmission shaft 111 includes a first mounting segment 1111 and a second mounting segment 1112 which are connected to each other; the first mounting segment 1111 is in driving connection with the sun gear 121; the bearing 112 is arranged on the second mounting segment 1112; the multi-way valve further includes a first limiting structure; the first limiting structure is arranged between an inner ring of the bearing 112 and the transmission shaft 111; and the first limiting structure is used for limiting a displacement of the inner ring of the bearing 112 in an axial direction relative to the transmission shaft 111. By means of the described arrangement, the first limiting structure can prevent the bearing 112 from flapping on the transmission shaft 111, and ensure an operation stability of the driving part 11; at the same time, since the bearing 112 is fixedly arranged on the transmission shaft 111, the first limiting structure can also prevent the transmission shaft 111 from moving axially while limiting a displacement of the bearing 112, and further improve the operation stability of the driving assembly 10.

In the present disclosure, the transmission shaft 111 also includes a limiting segment 1113, and the limiting segment 1113 is located between the first mounting segment 1111 and the second mounting segment 1112, an outer diameter of the limiting segment 1113 is greater than the outer diameters of the first mounting segment 1111 and an outer diameter of the second mounting segment 1112, and an end of the inner ring of the bearing 112 abuts against the limiting segment 1113, the driving assembly 10 further includes a bushing 13, the bushing 13 is sleeved on the transmission shaft 111, and the bushing 13 is located at an end of the bearing 112 away from the limiting segment 1113, the bushing 13 is fitted with the inner ring of the bearing 112 in a limiting manner, and the limiting segment 1113 is fitted with the bushing 13 to form a first limiting structure. By means of the described arrangement, the limiting segment 1113 can perform a lower limit position on the bearing 112 so as to prevent the bearing 112 from moving towards the limiting segment 1113 during rotation, the bushing 13 can perform an upper limiting position on the bearing 112, so as to prevent the bearing 112 from moving in a direction away from the limiting segment 1113 during rotation, the bushing 13 and the limiting segment 1113 cooperate to limit the bearing 112 in an axial direction, thereby realizing an axial positioning of the bearing 112 and the transmission shaft 111, ensuring the driving part 11 can stably provide the rotating torque to the reduction gear set 12, and ensuring a operation stability of the multi-way valve. In some embodiments, the bushing 13 can be press-fit onto the transmission shaft 111, and can also be fixed onto the transmission shaft 111 through welding, as long as a function of limiting the bearing 112 can be achieved.

Further, the multi-way valve further includes a second limiting structure, the second limiting structure is arranged between an outer ring of the bearing 112 and the mounting hole, and the second limiting structure is used for limiting a displacement of the outer ring of the bearing 112 in an axial direction relative to the transmission shaft 111. By means of the described arrangement, the first limiting structure and the second limiting structure can respectively axially limit the inner ring and the outer ring of the bearing 112, in this way, the first limiting structure or the second limiting structure can be prevented from simultaneously limiting the inner ring and the outer ring of the bearing 112, to prevent the bearing 112 from being subjected to unnecessary friction in a rotation process, so as to reduce a friction force applied to the bearing 112, thus, an unnecessary friction torque is reduced, and the power loss of the driving part 11 is reduced.

In an embodiment of the present disclosure, the second limiting structure includes two spacers 14, wherein the two spacers 14 are fixed in the mounting hole, the two spacers 14 are respectively located at two ends of the bearing 112, and the two spacers 14 are in limiting fit with an outer ring of the bearing 112. By means of the described arrangement, the two spacers 14 can respectively perform upper limiting and lower limiting on the outer ring of the bearing 112, preventing the outer ring of the bearing 112 from generating a circumferential displacement, and ensuring the stability of the multi-way valve in operation. In some embodiments, each of the two spacers 14 has a through opening, the transmission shaft 111 passes through the through opening, and a diameter of the through opening is greater than a diameter of the inner ring of the bearing 112. In this way, the two spacers 14 can avoid the inner ring of the bearing 112, and prevent the two spacers 14 from rubbing against the inner ring of the bearing 112, and reduce a friction torque received by the bearing 112 during rotation.

By means of the described arrangement, in some embodiments of the present disclosure, the first limiting structure and the second limiting structure can cooperate together to achieve an axial limiting effect on the bearing 112, the mounting hole cooperates with the bearing 112 to achieve a radial limiting effect on the bearing 112. Since the bearing 112 is fixedly connected to the transmission shaft 111, in this way, the first limiting structure, the second limiting structure and the mounting hole can position the transmission shaft 111 in an axial direction and a radial direction, to achieve a centering of the transmission shaft 111, so that the sun gear 121 fixed on the transmission shaft 111 can better mesh with the planet gear 122, a probability of the sun gear 121 and the planet gears 122 being blocked is reduced, and a reliability of the operation of the driving assembly 10 is improved.

It should be noted that the terms used herein are for the purpose of describing particular embodiments only and are not intended to be limiting of exemplary embodiments in accordance with the present disclosure. As used herein, the singular form is intended to include the plural form as well, unless the context clearly indicates, and further it should be understood that the terms "includes" and/or "including" when used in this description, specify the presence of features, steps, operations, devices, components, and/or combinations thereof.

The relative arrangements of components and steps, numerical expressions and numerical values set forth in these embodiments do not limit the scope of the present disclosure, unless being additionally specifically construed. Moreover, it should be understood that, for the convenience of description, the dimensions of the parts shown in the drawings are not drawn according to the actual proportional relationship. Techniques, methods, and devices known to a person skilled in the relevant art may not be discussed in detail, but should be considered, where appropriate, a part of the description. In all examples shown and discussed herein, any specific values should be construed as exemplary only and not as limiting. Therefore, other examples of the exemplary embodiments may have different values. It should be noted that similar signs and letters represent similar item in the following drawings, and thus, once an item is defined in one figure, it needs not be further discussed in subsequent figures.

In the description of the present disclosure, it should be understood that orientation or position relationships indicated by orientation words such as "front, back, up, down, left, right", "transverse, longitudinal, vertical, horizontal", and "top, bottom" are generally based on the orientation or position relationships shown in the drawings. These orientation words are merely used to facilitate the description of the present disclosure and simplify the description, and do not indicate and imply that the device or element referred to must have a particular orientation or be constructed and operated in a particular orientation, unless specified to the contrary, and thus cannot be understood as limit to the scope of protection of the present disclosure. The orientation terms "inner, outer" refer to the inside and outside with respect to the contour of each component itself.

For easy description, spatially relative terms, such as "over...", "above...", "on the upper surface of...", and "upper" may be used herein for describing spatial positional relationships of one device or feature with other devices or features as illustrated in the drawings. It should be understood that the spatially relative terms are intended to encompass different orientations in use or operation in addition to the orientation of the device depicted in the drawings. For example, if the device in the drawings are inverted, the device described as "above other devices or structures" or "over other devices or structures" would then be oriented as "below other devices or structures" or "under other devices or structures". Accordingly, the exemplary term "above..." may encompass both an orientation of "above..." and an orientation of "below...". The device may be positioned in various other ways as well (rotated 90 degrees or at other orientations), and the spatial relativity descriptions used herein are to be construed accordingly.

In addition, it should be noted that, using terms such as "first" and "second" to define parts is only for the convenience of distinguishing corresponding parts, and if no other statement is made, these terms do not have a special meaning, and thus cannot be construed as limiting the scope of protection of the present disclosure.

The above is only preferred embodiments of the present disclosure and is not intended to limit the present disclosure. A person skilled in the art may make various modifications and variations. Any modifications, equivalent replacements, improvements, etc. made within the spirit and principle of the present disclosure shall all fall within the scope of protection of the present invention.

## Claims

1. A multi-way valve, comprising:
a valve body (100);
a valve core (200) rotatably disposed in the valve body (100);
a driving assembly (10), the driving assembly (10) comprising a driving part (11) and a reduction gear set (12), the reduction gear set (12) having a sun gear (121), planet gears (122), a fixed gear (123), a first connecting plate (124), a second connecting plate (125) and an output part, the driving part (11) is in driving connection with the sun gear (121), a plurality of planet gears (122) are provided, and the plurality of planet gears (122) are all in meshing engagement with the sun gear (121), the fixed gear (123) is sleeved on the plurality of planet gears (122), and the fixed gear (123) is fixedly arranged on the valve body (100), outer teeth of the plurality of planet gears (122) are engaged with inner teeth of the fixed gear (123), and the first connecting plate (124) is rotatably connected to first ends of the plurality of planet gears (122), the second connecting plate (125) is rotatably connected to second ends of the plurality of planet gears (122), a gap is provided between a first end of the sun gear (121) and the first connecting plate (124), and between a second end of the sun gear (121) and the second connecting plate (125), an end of the output part is in driving connection with the plurality of planet gears (122), and an other end of the output part is in driving connection with the valve core (200), the driving part (11) drives the valve core (200) to rotate via the reduction gear set (12).

2. The multi-way valve according to claim 1, wherein the plurality of planet gears (122), the first connecting plate (124) and the second connecting plate (125) form a planet assembly, the planet assembly has an upper limit position and a lower limit position in an axial direction relative to the sun gear (121), and the first connecting plate (124) is arranged close to the upper limit position, the second connecting plate (125) is arranged close to the lower limit position, and when the planet assembly is located at the upper limit position, a gap is provided between the second end of the sun gear (121) and the second connecting plate (125); and when the planet assembly is located at the lower limit position, a gap is provided between the first end of the sun gear (121) and the first connecting plate (124).

3. The multi-way valve according to claim 2, wherein the sun gear (121) is fixedly connected to the driving part (11), and a distance between the first connecting plate (124) and the second connecting plate (125) is greater than a length of the sun gear (121) in the axial direction.

4. The multi-way valve according to claim 1, wherein the output part comprises an output gear (126), the output gear (126) is rotatably sleeved on the plurality of planet gears (122), outer teeth of the plurality of planet gears (122) are engaged with inner teeth of the output gear (126), an end of the output gear (126) is provided with an output shaft (127), and the output shaft (127) is in driving connection with the valve core (200).

5. The multi-way valve according to claim 4, wherein the output gear (126) comprises a bottom plate (1261) and an internal gear (1262), the internal gear (1262) is arranged on a side of the bottom plate (1261), and the output shaft (127) is arranged on an other side of the bottom plate (1261), a first limiting protrusion (1263) is provided on an end surface of a side of the bottom plate (1261) on which the internal gear (1262) is located, the first limiting protrusion (1263) is used for abutting against the second connecting plate (125).

6. The multi-way valve according to claim 5, wherein the valve body (100) is provided with a mounting groove (101), and the reduction gear set (12) is arranged in the mounting groove (101), a bottom of the mounting groove (101) is provided with a communication hole, and the output shaft (127) is in driving connection with the valve core (200) through the communication hole, the bottom of the mounting trough (101) is further provided with a second limiting protrusion (1011), and the second limiting protrusion (1011) is used for abutting against the bottom plate (1261).

7. The multi-way valve according to claim 1, wherein the valve body (100) is provided with a mounting base (102), and the reduction gear set (12) is arranged in the mounting base (102), the mounting base (102) is provided with a mounting hole, the driving part (11) comprises a transmission shaft (111) and a bearing (112), the transmission shaft (111) passes through the mounting hole and is in driving connection with the sun gear (121), the bearing (112) is sleeved on the transmission shaft (111) and is located between the transmission shaft (111) and an inner wall of the mounting hole.

8. The multi-way valve according to claim 7, wherein the transmission shaft (111) comprises a first mounting segment (1111) and a second mounting segment (1112) that are connected to each other, the first mounting segment (1111) is in driving connection with the sun gear (121), the bearing (112) is disposed on the second mounting segment (1112), wherein the multi-way valve further comprises a first limiting structure arranged between an inner ring of the bearing (112) and the transmission shaft (111), the first limiting structure is used for limiting a displacement of the inner ring of the bearing (112) in an axial direction relative to the transmission shaft (111).

9. The multi-way valve according to claim 8, wherein the transmission shaft (111) further comprises a limiting segment (1113), the limiting segment (1113) is located between the first mounting segment (1111) and the second mounting segment (1112), and an outer diameter of the limiting segment (1113) is greater than an outer diameter of the first mounting segment (1111) and an outer diameter of the second mounting segment (1112), an end of the inner ring of the bearing (112) abuts against the limiting segment (1113), wherein the driving assembly (10) further comprises a bushing (13), the bushing (13) is sleeved on the transmission shaft (111), and the bushing (13) is located at an end of the bearing (112) away from the limiting segment (1113), the bushing (13) is in limiting fit with the inner ring of the bearing (112), and the limiting segment (1113) cooperates with the bushing (13) to form the first limiting structure.

10. The multi-way valve according to claim 9, wherein the multi-way valve further comprises a second limiting structure, wherein the second limiting structure is disposed between an outer ring of the bearing (112) and the mounting hole, and the second limiting structure is configured to limit a displacement of the outer ring of the bearing (112) in an axial direction relative to the transmission shaft (111).

11. The multi-way valve according to claim 10, wherein the second limiting structure comprises two spacers (14), wherein the two spacers (14) are fixed in the mounting hole, the two spacers (14) are respectively located at two ends of the bearing (112), and the two spacers (14) are in limiting fit with an outer ring of the bearing (112).

12. The multi-way valve according to claim 11, wherein the plurality of planet gears (122), the first connecting plate (124) and the second connecting plate (125) form a planet assembly, the planet assembly has an upper limit position and a lower limit position in an axial direction relative to the sun gear (121), and the upper limit position of the planet assembly can be determined by the limiting segment (1113) or one of the two spacers (14), when the planet assembly is located at the upper limit position, the first connecting plate (124) abuts against an end of the limiting segment (1113) facing towards the planet assembly, or abuts against an end of one of the two spacers (14) facing towards the planet assembly.
